# EUROPEAN PATENT APPLICATION

(11) **EP 4 632 255 A1**
(43) Date of publication of application: **15.10.2025**
(21) Application number: 23899100.4
(22) Date of filing: 09.11.2023
(51) Int. Cl.: F16K 27/04, F16K 11/07, F16K 31/122

(54) **PILOT CAP UNIT**

(30) Priority: 09.12.2022 JP 2022197196
(71) Applicant: KYB Corporation, Minato-ku, Tokyo 105-5128 (JP)
(72) Inventor: ISHIBASHI, Koki, Tokyo 105-5128 (JP); YOSHIDA, Nobuyoshi, Tokyo 105-5128 (JP)
(74) Representative: Grünecker Patent- und Rechtsanwälte PartG mbB
(86) International application number: PCT/JP2023/040322
(87) International publication number: WO 2024/122258

(57) **Abstract**

A pilot cap unit (100) to be attached to a control valve (10) includes: first and second pilot caps (40, 60) attached to the valve housing (30) to face one end of the spool hole (31), the pilot caps (40, 60) defining a pilot chamber (11) between the valve housing (30) and the pilot caps (40, 60), the pilot caps (40, 60) include a communication path opening to the pilot chamber (11) and an outer surface (40a, 40b) of the pilot caps (40, 60) and extending linearly, first and second plugs (50, 65) configured to seal an opening of the communication path which is in the outer surface (40a, 60a) of the pilot caps (40, 60), and first and second spacers (58, 66) inserted into the communication path and configured to abut against a spool (25) and the plugs (50, 65) to regulate movement of the spool (25) in a direction in which the pilot chamber (11) contracts.

## Description

### TECHNICAL FIELD

The present invention relates to a pilot cap unit.

### BACKGROUND ART

JP2019-190635A discloses a control valve including a cap. The cap includes a pilot cap that is attached to a valve housing in which a spool is incorporated and that defines a pilot chamber with the valve housing, and a solenoid proportional valve that is attached to the pilot cap and controls a pressure of a working fluid to be supplied to the pilot chamber.

### SUMMARY OF INVENTION

In the control valve described in JP2019-190635A, some of control valves may be unused depending on a usage of a user. In the control valve described in JP2019-190635A, the working fluid discharged from a pump may leak into the unused pilot chamber through a space between an inner peripheral surface of a sliding hole in which the unused spool slides and an outer peripheral surface of the unused spool. In this case, the unused spool moves, and the unused control valve malfunctions.

An object of the present invention is to prevent an unused control valve from malfunctioning.

### SOLUTION TO PROBLEM

According to one aspect of the present invention, a pilot cap unit to be attached to a control valve having a valve housing through which a spool hole penetrates, a spool being slidably accommodated in the spool hole, the pilot cap unit includes: a pilot cap attached to the valve housing to face one end of the spool hole, the pilot cap defining a pilot chamber between the valve housing and the pilot cap, the pilot cap includes a communication path opening to the pilot chamber and an outer surface of the pilot cap and extending linearly, a sealing member configured to seal an opening of the communication path which is in the outer surface of the pilot cap, and a rod-shaped regulating member inserted into the communication path and configured to abut against the spool and the sealing member to regulate movement of the spool in a direction in which the pilot chamber contracts.

### BRIEF DESCRIPTION OF DRAWINGS

FIG. 1 is a fluid pressure circuit diagram of a fluid pressure control device including a control valve.
FIG. 2 is a plan view of a first pilot cap of a pilot cap unit according to an embodiment of the present invention.
FIG. 3 is a side view of the first pilot cap viewed from a direction III in FIG. 2.
FIG. 4 is a sectional view illustrating the pilot cap unit and the control valve according to the embodiment of the present invention.
FIG. 5 is an enlarged sectional view illustrating a pilot cap unit according to a first modification of the present invention.
FIG. 6 is an enlarged sectional view illustrating a pilot cap unit according to a second modification of the present invention.

### DESCRIPTION OF EMBODIMENTS

A first pilot cap unit 100a and a second pilot cap unit 100b according to an embodiment of the present invention will be described with reference to the drawings. Hereinafter, the first pilot cap unit 100a and the second pilot cap unit 100b are collectively simply referred to as a "pilot cap unit 100".

The pilot cap unit 100 and a control valve 10 including the pilot cap unit 100 are provided in a fluid pressure control device 1. The fluid pressure control device 1 is a device that controls an actuator to be driven by a working fluid discharged from a pump, and is mounted on a work machine such as a construction machine, an agricultural machine, or an industrial machine. Hereinafter, a case where the fluid pressure control device 1 is mounted on a hydraulic excavator and is used to control operations of actuators such as a hydraulic motor for traveling and a hydraulic cylinder for driving a boom, an arm, a bucket, and the like will be described. An example in which a hydraulic oil is used as the working fluid for driving the actuator of the hydraulic excavator will be described, and another fluid such as working water may be used as the working fluid.

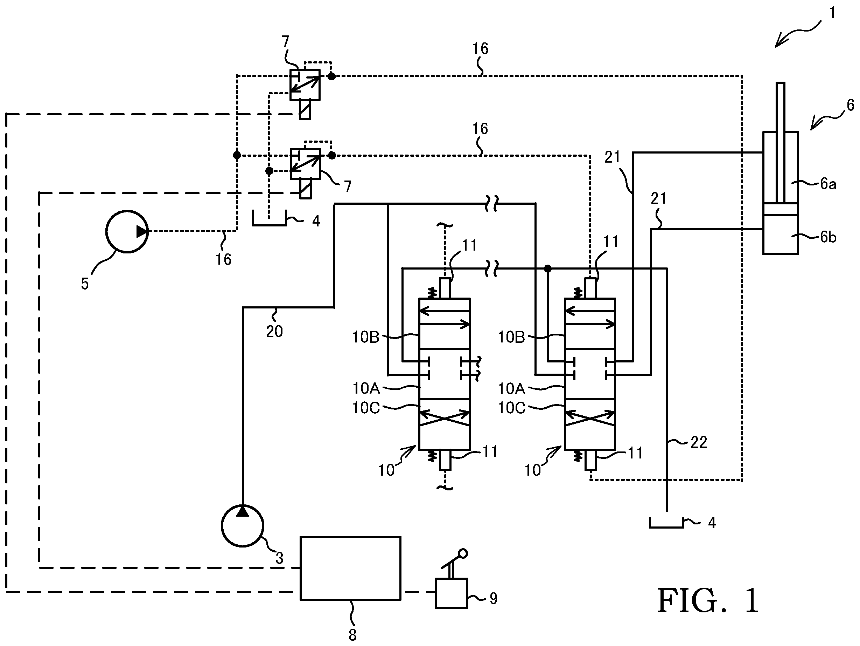

First, a hydraulic circuit of the fluid pressure control device 1 will be described with reference to FIG. 1. The fluid pressure control device 1 includes a hydraulic pump 3, a hydraulic cylinder 6 serving as an actuator to be driven by a hydraulic oil discharged from the hydraulic pump 3, a supply passage 20 through which the hydraulic oil discharged from the hydraulic pump 3 is supplied, and the control valve 10 that is provided in the supply passage 20 and controls a flow of the hydraulic oil supplied to and discharged from the hydraulic cylinder 6. A plurality of hydraulic cylinders 6 and control valves 10 are provided, and one hydraulic cylinder 6 and two control valves 10 are representatively illustrated in FIG. 1.

The hydraulic pump 3 is driven by an engine mounted on the hydraulic excavator. Without being limited thereto, the hydraulic pump 3 may be driven by an electric motor. The hydraulic oil discharged from the hydraulic pump 3 is led to the control valve 10 by the supply passage 20. The hydraulic oil is supplied to and discharged from a rod-side chamber 6a and a bottom-side chamber 6b of the hydraulic cylinder 6 through a pair of actuator passages 21. In accordance with a position of the control valve 10, one of the pair of actuator passages 21 is connected to the supply passage 20 and the other is connected to a tank passage 22 in communication with a tank 4.

The control valve 10 is a 4-port 3-position spool valve, and in the present embodiment, a plurality of control valves 10 having the same configuration are provided corresponding to the respective hydraulic cylinders 6. A pilot pressure is led to a pair of pilot chambers 11 through a pilot passage 16 in accordance with an operation direction and an operation amount of an operation lever 9 by an operator to switch the position of the control valve 10. The position of the control valve 10 is switched among a neutral position 10A, an extension position 10B, and a contraction position 10C in accordance with a magnitude of the pilot pressure supplied to the pair of pilot chambers 11.

Specifically, the pilot passage 16 is provided with a solenoid proportional pressure reducing valve 7 serving as a solenoid valve that reduces a discharge pressure of a pilot pump 5 to generate the pilot pressure. The solenoid proportional pressure reducing valve 7 is electrically connected to a controller 8 and generates the pilot pressure in accordance with a signal from the controller 8. The controller 8 transmits a control signal corresponding to the operation direction and the operation amount of the operation lever 9 to the solenoid proportional pressure reducing valve 7 to control the solenoid proportional pressure reducing valve 7. Accordingly, the control valve 10 is switched to the neutral position 10A, the extension position 10B, and the contraction position 10C, and the hydraulic oil is supplied to and discharged from the rod-side chamber 6a and the bottom-side chamber 6b of the hydraulic cylinder 6.

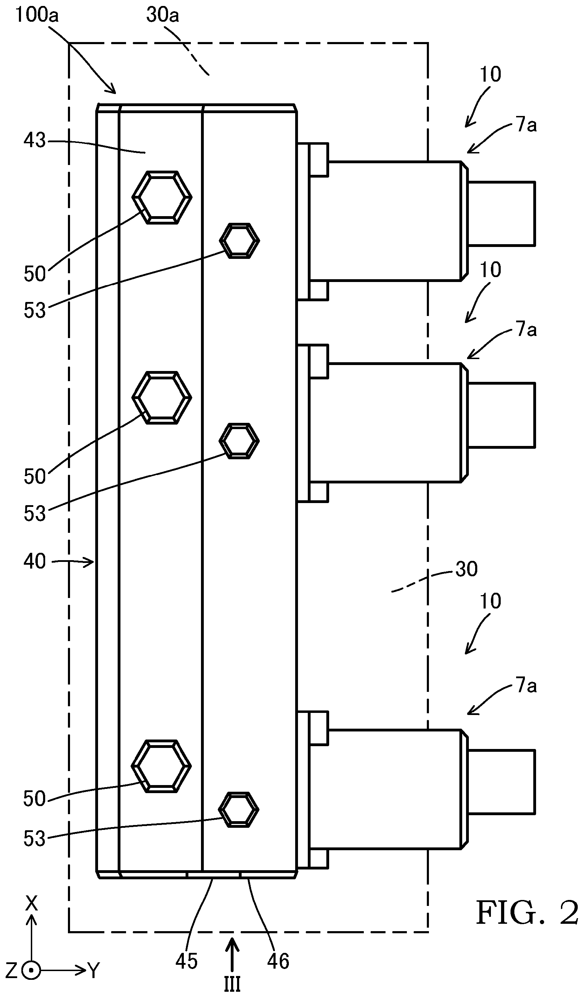

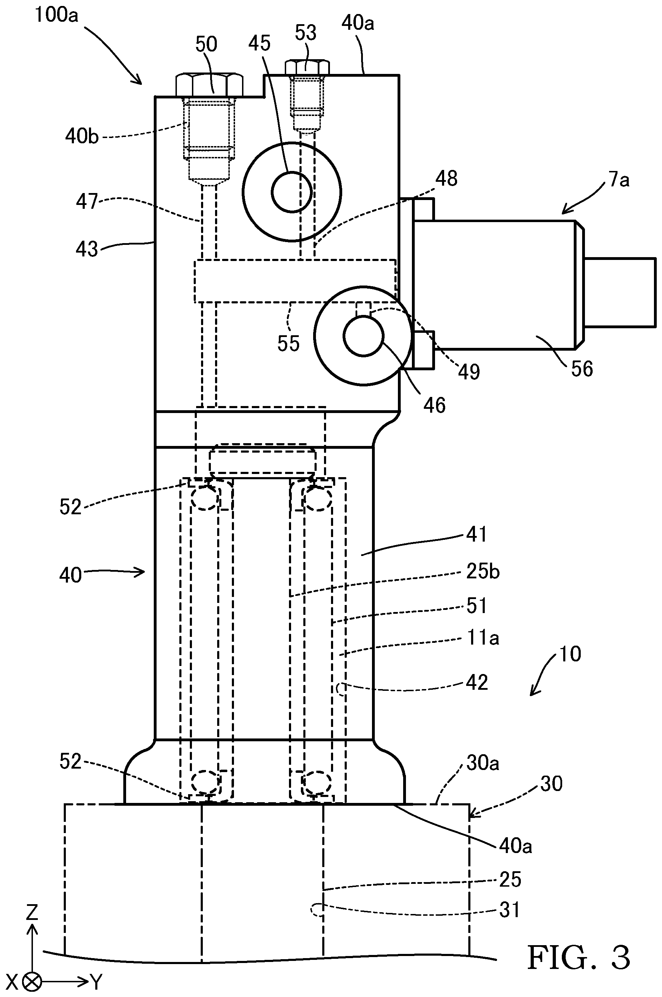

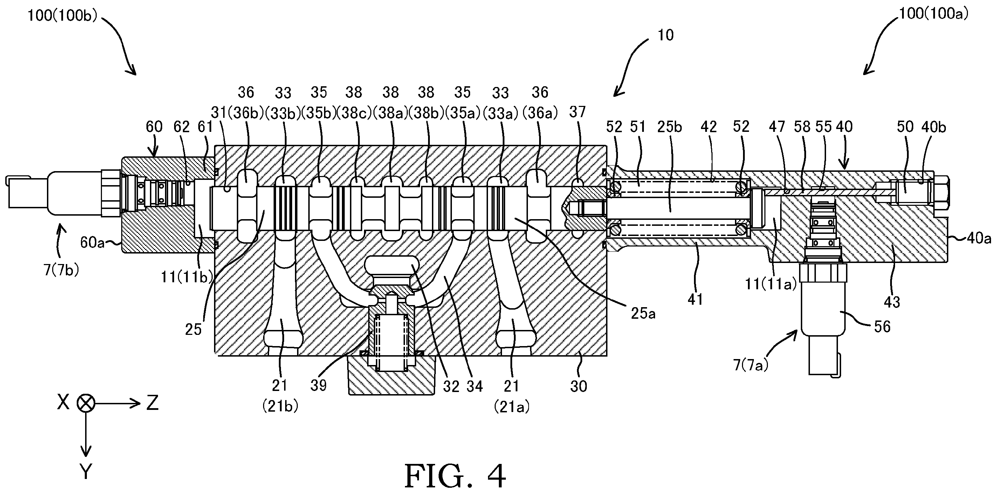

Next, configurations of the pilot cap unit 100 and the control valve 10 will be described in detail. FIG. 2 is a plan view of a first pilot cap 40 of the first pilot cap unit 100a, FIG. 3 is a side view of the first pilot cap 40 viewed from a direction III in FIG. 2, and FIG. 4 is a sectional view of the control valve 10. In FIGS. 2 and 3, a valve housing 30 to which the pilot cap unit 100 is attached and a spool 25 are indicated by a two-dot chain.

The pilot cap unit 100 is attached to the valve housing 30 of the control valve 10. In the present embodiment, the plurality of control valves 10 have a common valve housing 30. The first pilot cap unit 100a and the second pilot cap unit 100b are attached to the valve housing 30 and are provided over the plurality of control valves 10. Since the plurality of control valves 10 have the same configuration, the configuration of one control valve 10 will be representatively described below.

As illustrated in FIGS. 2 to 4, the first pilot cap unit 100a includes the first pilot cap 40 attached to the valve housing 30 to face one end of a spool hole 31, and a first solenoid proportional pressure reducing valve 7a that is attached to the first pilot cap 40 and controls a pressure of a pilot pressure oil serving as a pilot fluid supplied to a first pilot chamber 11a. The first pilot cap unit 100a is attached to the valve housing 30 to form the first pilot chamber 11a. The second pilot cap unit 100b includes a second pilot cap 60 (see FIG. 4) attached to the valve housing 30 to face the other end of the spool hole 31, and a second solenoid proportional pressure reducing valve 7b (see FIG. 4) that is attached to the second pilot cap 60 and controls the pressure of the pilot pressure oil supplied to a second pilot chamber 11b. The second pilot cap unit 100b is attached to the valve housing 30 to form the second pilot chamber 11b.

As illustrated in FIGS. 3 and 4, the control valve 10 includes the valve housing 30 which is rectangular parallelepiped and the spool 25 slidably incorporated in the valve housing 30. The spool hole 31 in which the spool 25 is slidably accommodated penetrates through the valve housing 30. The spool 25 includes a main body 25a accommodated in the spool hole 31 and a spool end 25b coupled to one end of the spool 25 and extending into the first pilot chamber 11a. A pair of spring receiving members 52 slidable along an outer periphery of the spool end 25b is accommodated in the first pilot chamber 11a, and a spring 51 serving as a biasing member is interposed between the pair of spring receiving members 52.

As illustrated in FIG. 4, the valve housing 30 includes a supply port 32 in communication with the supply passage 20, an actuator port 33 in communication with the actuator passage 21, a lead-out passage 34 in communication with the supply port 32 and leading the hydraulic oil supplied from the supply port 32 to the actuator port 33, a lead-out port 35 in communication with the lead-out passage 34, a tank port 36 serving as a second port in communication with the tank passage 22, a drain passage (not illustrated) in communication with the tank 4, a drain port 37 serving as a first port in communication with the drain passage, and a neutral port 38 in communication with a neutral passage (not illustrated) and leading the working fluid to the control valve 10 on a downstream side.

The actuator port 33, the lead-out port 35, the tank port 36, the drain port 37, and the neutral port 38 open to the spool hole 31. Two actuator ports 33, two lead-out ports 35, and two tank ports 36 are provided symmetrically. Three neutral ports 38 are provided near a center of the spool hole 31 in an axial direction. In the following description of the actuator port 33, the lead-out port 35, and the tank port 36, "a" is added to the reference numeral of each port provided on a right side of the neutral port 38 in FIG. 4, and "b" is added to the reference numeral of each port provided on a left side of the neutral port 38. Among the three neutral ports 38, the neutral port provided at the center in FIG. 4 is also referred to as a neutral port 38a, the neutral port provided on the right side is also referred to as a neutral port 38b, and the neutral port provided on the left side is also referred to as a neutral port 38c.

The drain port 37, the tank port 36a, the actuator port 33a, the lead-out port 35a, the neutral port 38b, the neutral port 38a, the neutral port 38c, the lead-out port 35b, the actuator port 33b, and the tank port 36b open to the spool hole 31 in this order from the right side in FIG. 4. The drain port 37 is provided adjacent to the first pilot chamber 11a. Here, "the drain port 37 is adjacent to the first pilot chamber 11a" means that no other port is provided between the drain port 37 and the first pilot chamber 11a. The tank port 36b is provided adjacent to the second pilot chamber 11b. That is, no other port is provided between the tank port 36b and the second pilot chamber 11b. A sub spool 39 is provided in the lead-out passage 34.

As in the state illustrated in FIG. 4, in a state where the pilot pressure is led to neither of the pilot chambers 11, the spool 25 is at the neutral position by a biasing force of the spring 51, and communication between the lead-out port 35a and the actuator port 33a, communication between the actuator port 33a and the tank port 36a, communication between the lead-out port 35b and the actuator port 33b, and communication between the actuator port 33b and the tank port 36b are all blocked by the spool 25. The neutral port 38a is in communication with the neutral port 38b and the neutral port 38c, and the hydraulic oil led from the control valve 10 on an upstream side to the neutral port 38a is led to the control valve 10 on the downstream side through the neutral port 38b and the neutral port 38c.

When the pilot pressure is led to the first pilot chamber 11a and the spool 25 moves to the left side from the state illustrated in FIG. 4, the lead-out port 35b and the actuator port 33b are in communication with each other, and the lead-out passage 34 and the actuator passage 21b on the left side in FIG. 4 are in communication with each other. Further, the sub spool 39 is opened by the pressure of the hydraulic oil led from the supply port 32 to the lead-out passage 34, and the hydraulic oil from the supply port 32 is supplied to the actuator through the lead-out passage 34 and the actuator passage 21b. On the other hand, the actuator port 33a and the tank port 36a are in communication with each other, and the actuator passage 21a on the right side in FIG. 4 and the tank passage 22 are in communication with each other. Accordingly, the hydraulic oil is discharged from the actuator to the tank 4 through the actuator passage 21a and the tank passage 22. The communication between the neutral port 38a and the neutral port 38b and the communication between the neutral port 38a and the neutral port 38c are blocked, and the flow of the hydraulic oil to the control valve 10 on the downstream side through the neutral passage is blocked.

When the pilot pressure is led to the second pilot chamber 11b and the spool 25 moves to the right side from the state illustrated in FIG. 4, the lead-out port 35a and the actuator port 33a are in communication with each other, and the lead-out passage 34 and the actuator passage 21a are in communication with each other. The sub spool 39 is opened by the pressure of the hydraulic oil led from the supply port 32 to the lead-out passage 34, and the hydraulic oil from the supply port 32 is supplied to the actuator through the lead-out passage 34 and the actuator passage 21a. On the other hand, the actuator port 33b and the tank port 36b are in communication with each other, and the actuator passage 21b and the tank passage 22 are in communication with each other. Accordingly, the hydraulic oil is discharged from the actuator to the tank 4 through the actuator passage 21b and the tank passage 22. The communication between the neutral port 38a and the neutral port 38b and the communication between the neutral port 38a and the neutral port 38c are blocked, and the flow of the hydraulic oil to the control valve 10 on the downstream side through the neutral passage is blocked.

Hereinafter, an axial direction of the spool 25 is also referred to as a Z direction. A plurality of spools 25 and the plurality of pilot chambers 11 are arranged in a direction orthogonal to the axial direction of the spool 25. Therefore, an arrangement direction of the spool 25 and the pilot chamber 11 is also referred to as the X direction. Further, a direction orthogonal to each of the axial direction (Z direction) of the spool 25 and the arrangement direction (X direction) of the spool 25 is also referred to as a Y direction.

As illustrated in FIGS. 2 to 4, the first pilot cap 40 of the first pilot cap unit 100a includes a cylindrical tube portion 41 provided coaxially with the spool 25, a spring accommodation hole 42 (see FIGS. 3 and 4) serving as an accommodation hole that accommodates the spring 51 which biases the spool 25 and that defines the first pilot chamber 11a between the valve housing 30 and the spring accommodation hole 42, and a protruding end portion 43 protruding from the tube portion 41 to a side opposite to the valve housing 30 along the axial direction (Z direction) of the spool 25. The protruding end portion 43 couples a plurality of tube portions 41 (see FIG. 2). The first pilot cap 40 is attached to a side surface 31a of the valve housing 30 by a fastening member such as a bolt.

As illustrated in FIGS. 3 and 4, the first pilot cap 40 is attached to the valve housing 30 to define the first pilot chamber 11a to which one end of the spool 25 faces. The spring 51, the spring receiving member 52, and the spool end 25b are accommodated in the first pilot chamber 11a. Similarly, the second pilot cap 60 of the second pilot cap unit 100b is attached to the valve housing 30 to define the second pilot chamber 11b to which the other end of the spool 25 faces.

As illustrated in FIGS. 3 and 4, the first pilot cap 40 includes a cap-side supply port 45 which is connected to the pilot pump 5 and to which the pilot pressure oil is supplied from the pilot pump 5, a cap-side discharge port 46 that discharges the pilot pressure oil to the tank 4, a lead-out passage 48 that leads the pilot pressure oil from the cap-side supply port 45 to the solenoid proportional pressure reducing valve 7a, a communication path 47 that opens to the first pilot chamber 11a (spring accommodation hole 42) and an outer surface 40a of the first pilot cap 40 and extends linearly, a first plug 50 serving as a sealing member that seals an opening 40b of the communication path 47 which is in the outer surface 40a of the first pilot cap 40, and a cap-side drain passage 49 that leads, to the cap-side discharge port 46, the pilot pressure oil discharged from the solenoid proportional pressure reducing valve 7a.

The cap-side supply port 45 and the cap-side discharge port 46 are provided at the protruding end portion 43 of the first pilot cap 40. In the present embodiment, the cap-side supply port 45 and the cap-side discharge port 46 are provided side by side on one end surface of the first pilot cap 40 in a longitudinal direction (X direction). The cap-side supply port 45 and the cap-side discharge port 46 extend in the X direction.

As illustrated in FIGS. 3 and 4, the solenoid proportional pressure reducing valve 7a includes the valve body (not illustrated) accommodated in the valve body accommodation hole 55, a solenoid 56 that applies a thrust to the valve body, and a spring (not illustrated) that applies a biasing force to the valve body in a direction against the thrust of the solenoid 56. The solenoid proportional pressure reducing valve 7a controls the pilot pressure supplied to the first pilot chamber 11a in accordance with a control current supplied to the solenoid 56. In the present embodiment, the solenoid proportional pressure reducing valve 7a is a direct proportional pressure reducing valve that increases the pilot pressure as the current supplied to the solenoid 56 increases.

The lead-out passage 48 is in communication with the cap-side supply port 45 and the valve body accommodation hole 55, and is linearly formed over the valve body accommodation hole 55 and the outer surface 40a of the first pilot cap 40. The opening of the lead-out passage 48 which is in the outer surface 40a of the first pilot cap 40 is sealed by a plug 53. The communication path 47 is linearly formed over the first pilot chamber 11a and the outer surface 40a of the first pilot cap 40 through the valve body accommodation hole 55. A plurality of lead-out passages 48 and a plurality of communication paths 47 are provided corresponding to the respective solenoid proportional pressure reducing valves 7a. Each of the plurality of communication paths 47 is in communication with the cap-side supply port 45. The pilot pressure oil led from the cap-side supply port 45 to the valve body accommodation hole 55 through the lead-out passage 48 is reduced in pressure by the solenoid proportional pressure reducing valve 7a and led to the first pilot chamber 11a through the communication path 47. In this way, the communication path 47 allows the solenoid proportional pressure reducing valve 7a to be in communication with the first pilot chamber 11a and constitutes a part of the pilot passage.

A plurality of cap-side drain passages 49 are provided corresponding to the respective solenoid proportional pressure reducing valves 7a. The cap-side drain passage 49 allows the cap-side discharge port 46 to be in communication with the valve body accommodation hole 55.

As illustrated in FIG. 4, the first pilot cap 40 has a first spacer 58 serving as a regulating member inserted into the communication path 47. FIG. 4 illustrates a sectional view passing through the communication path 47 and the valve body accommodation hole 55. The first spacer 58 is formed in a rod shape and is provided over the communication path 47, the valve body accommodation hole 55, and the first pilot chamber 11a. The first spacer 58 is formed separately from the first plug 50, and both ends thereof abut against the spool end 25b of the spool 25 and the first plug 50, respectively. Accordingly, movement of the spool 25 in a direction in which the first pilot chamber 11a contracts (rightward in FIG. 4) is physically regulated by the first spacer 58.

As illustrated in FIG. 4, the second pilot cap 60 of the second pilot cap unit 100b has a cylindrical tube portion 61 provided coaxially with the spool 25, and the second pilot chamber 11b is defined between the valve housing 30 and the second pilot cap 60 by the tube portion 61. The pilot pressure reduced by the solenoid proportional pressure reducing valve 7b is led to the second pilot chamber 11b through the passage 62. Regarding a configuration of an oil passage through which the pilot pressure is led from the pilot pump 5 to the second pilot chamber 11b through the solenoid proportional pressure reducing valve 7b, for example, the same configuration as that of the first pilot cap 40 can be applied, and thus detailed description thereof will be omitted.

Here, in the control valve 10, some of the control valves 10 may be unused depending on a usage of a user. For example, depending on a construction machine on which the control valve 10 is mounted, the hydraulic cylinder 6 may not be attached to the actuator passage 21 of some of the control valves 10, and the spool 25 may be unused. In such a control valve 10, the hydraulic oil discharged from the hydraulic pump 3 may leak into the pilot chamber 11 through a space between an inner peripheral surface of the spool hole 31 and an outer peripheral surface of the spool 25. When the unused spool 25 is moved by the pressure in the pilot chamber 11, the unused control valve 10 malfunctions. In addition, when the unused spool 25 is moved by the pressure in the pilot chamber 11, the flow of the hydraulic oil is generated in the unused control valve 10, and thus the pressure of the hydraulic oil supplied to the control valve 10 in use decreases, which may adversely affect the operation of the control valve 10 in use.

In contrast, in the first pilot cap unit 100a according to the present embodiment, the first spacer 58 is provided in the communication path 47, and movement of the spool 25 in the direction in which the first pilot chamber 11a contracts is regulated. Accordingly, even when the hydraulic oil leaks into the pilot chamber 11 (specifically, second pilot chamber 11b) of the unused control valve 10, the movement of the spool 25 due to the pressure of the leaked hydraulic oil is prevented by the first spacer 58. Accordingly, malfunction of the unused control valve 10 is prevented.

Here, the drain port 37 is adjacent to the first pilot chamber 11a, and the tank port 36 is adjacent to the second pilot chamber 11b. The drain port 37 has a low pressure (atmospheric pressure) because it is in communication with the atmosphere, whereas the tank port 36 has a slightly higher pressure than the drain port 37 because it is in communication with the tank 4 in which the pressure is likely to be accumulated. Therefore, when the hydraulic oil leaks into the second pilot chamber 11b through the space between the inner peripheral surface of the spool hole 31 and the outer peripheral surface of the spool 25, the pressure is likely to be accumulated in the second pilot chamber 11b. However, the movement of the spool 25 due to the pressure in the second pilot chamber 11b is prevented by the first spacer 58. On the other hand, the drain port 37 is at an atmospheric pressure unlike the tank port 36. Therefore, even when the hydraulic oil leaks into the first pilot chamber 11a through the space between the inner peripheral surface of the spool hole 31 and the outer peripheral surface of the spool 25, the hydraulic oil is easily discharged to the drain port 37, and thus the pressure is less likely to be accumulated in the first pilot chamber 11a. Therefore, the movement of the spool 25 due to the pressure of the hydraulic oil in the second pilot chamber 11b in which the pressure is likely to be accumulated is regulated by the first spacer 58, and the movement of the spool 25 to one side in the axial direction is regulated, so that the malfunction of the unused control valve 10 can be prevented.

In the first pilot cap unit 100a, the first plug 50 and the first spacer 58 are separately formed. Accordingly, the manufacturing cost of the first pilot cap 40 can be reduced as compared with the case of preparing a dedicated plug in which the first plug 50 and the first spacer 58 are integrally formed. When the unused control valve 10 is to be used, the unused control valve 10 can be easily used because it is only necessary to remove the first spacer 58. Therefore, the first pilot cap 40 can be shared regardless of the use state of the control valve 10.

In the first pilot cap unit 100a, since the communication path 47 for leading the pilot pressure oil from the solenoid proportional pressure reducing valve 7a to the first pilot chamber 11a is used as a space for providing the first spacer 58, it is unnecessary to provide a dedicated passage for providing the first spacer 58. Therefore, the manufacturing cost of the first pilot cap 40 is reduced.

According to the above-described embodiment, the following effects are exerted.

In the first pilot cap unit 100a, the first spacer 58 is provided in the communication path 47, and the movement of the spool 25 in the direction in which the first pilot chamber 11a contracts is regulated. Accordingly, even when the hydraulic oil leaks into the pilot chamber 11 (specifically, second pilot chamber 11b) of the unused control valve 10, the movement of the spool 25 due to the pressure of the leaked hydraulic oil is prevented by the first spacer 58. Accordingly, malfunction of the unused control valve 10 is prevented. Since the first plug 50 and the first spacer 58 are formed separately, the manufacturing cost of the first pilot cap 40 can be reduced, and the unused control valve 10 can be easily used only by removing the first spacer 58.

The following modifications are also within the scope of the present invention, and it is also possible to combine configurations shown in the modifications with the configurations described in the above-described embodiment, or to combine the configurations described in the following different modifications.

### <First Modification>

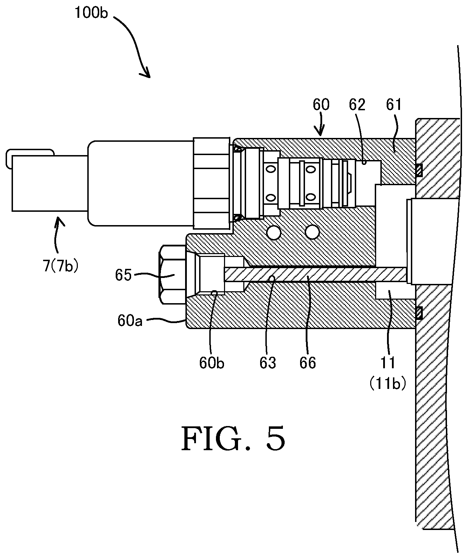

In the above-described embodiment, only the first pilot cap 40 of the first pilot cap unit 100a includes the first spacer 58 that regulates movement of the spool 25. Without being limited thereto, as illustrated in FIG. 5, the second pilot cap 60 of the second pilot cap unit 100b may include a second spacer 66 that regulates movement of the spool 25 in a direction in which the second pilot chamber 11b contracts.

Specifically, the second pilot cap 60 includes a detection passage 63 enabling communication between a pressure sensor (not illustrated) that detects a pressure in the second pilot chamber 11b and the second pilot chamber 11b, a second plug 65 serving as a sealing member that seals an opening 60b of the detection passage 63 which is in an outer surface 60a of the second pilot cap 60, and a second spacer 66 serving as a regulating member provided in the detection passage 63. The detection passage 63 opens to the second pilot chamber 11b and the outer surface 60a of the second pilot cap 60 and extends linearly. Instead of the pressure sensor, the second plug 65 is attached to the opening 60b of the detection passage 63. The second spacer 66 is formed in a rod shape and is provided over the detection passage 63 and the second pilot chamber 11b. The second spacer 66 is formed separately from the second plug 65 and abuts against the spool 25 and the second plug 65. Accordingly, the movement of the spool 25 in the direction in which the second pilot chamber 11b contracts (leftward in FIG. 5) is physically regulated by the second spacer 66. Accordingly, movement of the spool 25 toward both sides in the axial direction is regulated by the first spacer 58 and the second spacer 66, and thus movement of the unused spool 25 is more reliably prevented. Since the detection passage 63 is used as a space for providing the second spacer 66, it is unnecessary to provide a dedicated passage for providing the second spacer 66, and thus the manufacturing cost of the second pilot cap 60 is reduced. The movement of the spool 25 due to the pressure of the leaked working fluid can be prevented only by replacing the second plug 65 with a pressure sensor and providing the second spacer 66 in the detection passage 63.

The detection passage 63 may be provided in the first pilot cap unit 100a. In this case, the detection passage 63 of the first pilot cap 40 opens to the first pilot chamber 11a and the outer surface 40a of the first pilot cap 40 as a communication path and extends linearly, and allows a pressure sensor that detects a pressure in the first pilot chamber 11a to be in communication with the first pilot chamber 11a to lead the working fluid to the pressure sensor. When the detection passage 63 is formed in the first pilot cap 40, the first plug 50 serving as a sealing member seals the opening 40b of the detection passage 63 which is in the outer surface 40a of the first pilot cap 40, and the first spacer 58 serving as a regulating member is provided in the detection passage 63 to regulate the movement of the spool 25 in the direction in which the first pilot chamber 11a contracts.

### <Second Modification>

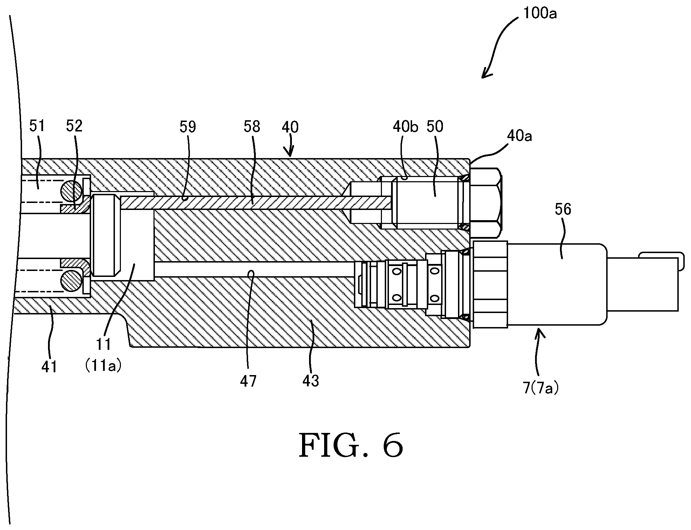

In the above-described embodiment, the first spacer 58 is provided in the communication path 47 that leads a pilot pressure oil from the solenoid proportional pressure reducing valve 7a to the first pilot chamber 11a. Without being limited thereto, as illustrated in FIG. 6, the first spacer 58 may be provided in a dedicated passage 59 formed separately from the communication path 47. In this configuration, the opening 40b of the passage 59 which is in the outer surface 40a of the first pilot cap 40 is sealed by the first plug 50, and both end portions of the first spacer 58 abut against the spool end 25b of the spool 25 and the first plug 50, respectively. Accordingly, the movement of the spool 25 in a direction in which the first pilot chamber 11a contracts is physically regulated. With this configuration, the same effects as those of the above-described embodiment can also be exerted.

Similarly, the second spacer 66 according to the first modification may be provided in a dedicated passage (not illustrated) provided separately from the detection passage 63. The passage opens to the second pilot chamber 11b and the outer surface 60a of the second pilot cap 60 and extends linearly. The second spacer 66 may be provided in the passage 62 that allows the solenoid proportional pressure reducing valve 7b to be in communication with the second pilot chamber 11b. With this configuration, the same effects as those of the above-described embodiment can also be exerted.

### <Third Modification>

In the above-described embodiment, the first spacer 58 is formed separately from the first plug 50. Without being limited thereto, the first spacer 58 may be formed integrally with the first plug 50 and provided in the communication path 47. The second spacer 66 according to the first modification may be formed integrally with the second plug 65 and provided in the detection passage 63. In this case, the solenoid proportional pressure reducing valve 7b is disposed like the solenoid proportional pressure reducing valve 7a of the first pilot cap 40, and an opening of the passage 62 which is in the outer surface 60a of the second pilot cap 60 is sealed by a plug (not illustrated). With this configuration, the same effects as those of the above-described embodiment can also be exerted.

### <Fourth Modification>

In the above-described embodiment, an example in which the plurality of first pilot chambers 11a and the plurality of solenoid proportional pressure reducing valves 7a are provided in the first pilot cap 40 has been described, but the present invention is not limited thereto. The present invention can also be applied to a case where a single first pilot chamber 11a and a single solenoid proportional pressure reducing valve 7a are provided in the first pilot cap 40.

### <Fifth Modification>

In the above-described embodiment, an example in which the solenoid proportional pressure reducing valve 7 is a direct proportional pressure reducing valve that increases a pilot pressure as a current supplied to the solenoid 56 increases has been described, but the present invention is not limited thereto. The solenoid proportional pressure reducing valve 7 may be an inverse proportional pressure reducing valve that reduces the pilot pressure as the current supplied to the solenoid 56 increases.

### <Sixth Modification>

In the above-described embodiment, the solenoid proportional pressure reducing valves 7a and 7b are provided in the first pilot cap 40 and the second pilot cap 60, respectively. Without being limited thereto, the first pilot cap 40 and the second pilot cap 60 may not be provided with the solenoid proportional pressure reducing valves 7a and 7b, and a hydraulic oil of a pilot pressure generated outside may be led to the first pilot cap 40 and the second pilot cap 60.

Configurations, functions, and effects of the embodiments of the present invention configured as described above will be collectively described.

The pilot cap unit 100 attached to the control valve 10 having the valve housing 30 through which the spool hole 31 penetrates, the spool 25 being slidably accommodated in the spool hole 31, the pilot cap unit 100 including: a pilot cap (first and second pilot caps 40 and 60) attached to the valve housing 30 to face one end of the spool hole 31, the pilot cap (first and second pilot caps 40 and 60) defining the pilot chamber 11 between the valve housing 30 and the pilot cap, in which the pilot cap (first and second pilot caps 40 and 60) includes a communication path (communication path 47, passage 62, and detection passage 63) that opens to the pilot chamber 11 and the outer surfaces 40a and 60a of the pilot cap (first and second pilot caps 40 and 60) and extends linearly, a sealing member (first and second plugs 50 and 65) that seals the openings 40b and 60b of the communication path (communication path 47, passage 62, and detection passage 63) which is in the outer surfaces 40a and 60a of the pilot cap (first and second pilot caps 40 and 60), and a rod-shaped regulating member (first and second spacers 58 and 66) that is inserted into the communication path (communication path 47, passage 62, and detection passage 63), and abuts against the spool 25 and the sealing member (first and second plugs 50 and 65) to regulate movement of the spool 25 in a direction in which the pilot chamber 11 contracts.

In this configuration, the regulating member (first and second spacers 58 and 66) is provided in the communication path (communication path 47, passage 62, and detection passage 63), and the movement of the spool 25 in the direction in which the pilot chamber 11 contracts is regulated. Accordingly, even when a working fluid leaks into the pilot chamber 11 of the unused control valve 10, the movement of the spool 25 due to a pressure of the leaked working fluid is prevented by the regulating member (first and second spacers 58 and 66). Accordingly, malfunction of the unused control valve 10 is prevented.

The pilot cap unit 100 further including: the solenoid proportional pressure reducing valve 7 serving as a solenoid valve attached to the pilot cap (first and second pilot caps 40 and 60) and configured to control a pressure of a pilot fluid to be supplied to the pilot chamber 11, in which the communication path (communication path 47, passage 62) allows the solenoid proportional pressure reducing valve 7 to be in communication with the pilot chamber 11.

In this configuration, since the communication path (communication path 47, passage 62) for leading the pilot fluid from the solenoid proportional pressure reducing valve 7 to the pilot chamber 11 is used as a space for providing the regulating member (first and second spacers 58 and 66), it is unnecessary to provide a dedicated passage for providing the regulating member (first and second spacers 58 and 66).

In the pilot cap unit 100, the communication path is the detection passage 63 enabling communication between a pressure sensor configured to detect a pressure in the pilot chamber 11 and the pilot chamber 11, and instead of the pressure sensor, the sealing member (first and second plugs 50 and 65) is attached to the opening 60b of the detection passage 63.

In this configuration, since the detection passage 63 allowing the pressure sensor to be in communication with the pilot chamber 11 is used as the space for providing the regulating member (first and second spacers 58 and 66), it is unnecessary to provide a dedicated passage for providing the regulating member (first and second spacers 58 and 66). Therefore, the movement of the spool 25 due to the pressure of the leaked working fluid can be prevented only by replacing the sealing member (first and second plugs 50 and 65) with a pressure sensor and providing the regulating member (first and second spacers 58 and 66) in the detection passage 63.

The pilot cap unit 100 further including: the first pilot cap 40 that defines the first pilot chamber 11a between the valve housing 30 and the first pilot cap 40, and the second pilot cap 60 that is attached to the valve housing 30 to face the other end of the spool hole 31 and that defines the second pilot chamber 11b between the valve housing 30 and the second pilot cap 60, in which the valve housing 30 includes the drain port 37 serving as a first port provided adjacent to the first pilot chamber 11a, the first port opening to the spool hole 31 and communicating with an atmosphere, and the tank port 36 serving as a second port provided adjacent to the second pilot chamber 11b the second port opening to the spool hole 31 having a higher pressure than the drain port 37, and at least the first pilot cap 40 is provided with the first spacer 58.

In this configuration, the drain port 37 in communication with the atmosphere is adjacent to the first pilot chamber 11a, and the tank port 36 having a higher pressure than the drain port 37 is adjacent to the second pilot chamber 11b. Since the drain port 37 is in communication with the atmosphere, the pressure is less likely to be accumulated in the first pilot chamber 11a. However, since the pressure is higher in the tank port 36 than in the drain port 37, the pressure is more likely to be accumulated in the second pilot chamber 11b than in the first pilot chamber 11a. Therefore, when the working fluid leaks between an inner peripheral surface of the spool hole 31 and an outer peripheral surface of the spool 25, the pressure is more likely to be accumulated in the second pilot chamber 11b than in the first pilot chamber 11a. However, the movement of the spool 25 due to the pressure in the second pilot chamber 11b can be prevented by the first spacer 58.

Embodiments of the present invention were described above, but the above embodiments are merely examples of applications of the present invention, and the technical scope of the present invention is not limited to the specific constitutions of the above embodiments.

With respect to the above description, the contents of application No. 2022-197196, with a filing date of December 9, 2022 in Japan, are incorporated herein by reference.

## Claims

1. A pilot cap unit to be attached to a control valve having a valve housing through which a spool hole penetrates, a spool being slidably accommodated in the spool hole, the pilot cap unit comprising:
a pilot cap attached to the valve housing to face one end of the spool hole, the pilot cap defining a pilot chamber between the valve housing and the pilot cap, wherein
the pilot cap includes
a communication path opening to the pilot chamber and an outer surface of the pilot cap and extending linearly,
a sealing member configured to seal an opening of the communication path which is in the outer surface of the pilot cap, and
a rod-shaped regulating member inserted into the communication path and configured to abut against the spool and the sealing member to regulate movement of the spool in a direction in which the pilot chamber contracts.

2. The pilot cap unit according to claim 1, further comprising:
a solenoid valve attached to the pilot cap and configured to control a pressure of a pilot fluid to be supplied to the pilot chamber, wherein
the communication path allows the solenoid valve to be in communication with the pilot chamber.

3. The pilot cap unit according to claim 1, wherein
the communication path is a detection passage enabling communication between the pilot chamber and a pressure sensor configured to detect a pressure in the pilot chamber, and
instead of the pressure sensor, the sealing member is attached to the opening of the detection passage.

4. The pilot cap unit according to claim 1, further comprising:
a first pilot cap serving as the pilot cap that defines a first pilot chamber serving as the pilot chamber between the valve housing and the first pilot cap; and
a second pilot cap that is attached to the valve housing to face the other end of the spool hole and that defines a second pilot chamber between the valve housing and the second pilot cap, wherein
the valve housing has a first port provided adjacent to the first pilot chamber, the first port opening to the spool hole and communicating with an atmosphere, and a second port provided adjacent to the second pilot chamber the second port opening to the spool hole having a higher pressure than the first port, and
at least the first pilot cap is provided with the regulating member.
